# EUROPÄISCHE PATENTSCHRIFT

(11) **EP 3 277 435 B1**
(45) Veröffentlichungstag und Bekanntmachung des Hinweises auf die Patenterteilung: **17.10.2018**
(21) Anmeldenummer: 17705371.7
(22) Anmeldetag: 14.02.2017
(51) Int. Cl.: B05B 15/00

(54) **VERTEILERSYSTEM FÜR EIN LUFT-PULVER-GEMISCH**
DISTRIBUTION SYSTEM FOR POWDER AIR MIXTURE
DISPOSITIF DE DISTRIBUTION D'UN MELANGE POUDRE-AIR

(30) Priorität: 18.03.2016 DE 102016105067
(43) Veröffentlichungstag der Anmeldung: 07.02.2018
(73) Patentinhaber: Gema Switzerland GmbH, 9015 St. Gallen (CH)
(72) Erfinder: STEIGER, Peter, 9312 Häggenschwil (CH); STEGER, Georg, 9015 St. Gallen (CH)
(74) Vertreter: Trinks, Ole
(86) Internationale Anmeldenummer: PCT/EP2017/053266
(87) Internationale Veröffentlichungsnummer: WO 2017/157600

(56) Entgegenhaltungen:
- DE-A1- 19 549 186
- DE-C1- 3 704 551
- US-A- 4 823 731

## Beschreibung

Die vorliegende Erfindung betrifft ein Verteilersystem für ein aus einer Pulverbeschichtungskabine abgesaugtes Luft-Pulver-Gemisch. Des Weiteren betrifft die Erfindung ein Pulverbeschichtungssystem mit einer Pulverbeschichtungskabine und einem solchen Verteilersystem.
Aus der Beschichtungstechnik ist es bekannt, bei Pulverbeschichtungskabinen, in welchen Gegenstände mit Hilfe einer Sprühvorrichtung mit Pulver beschichtbar sind, Luft und Überschusspulver aus dem Kabineninnenraum abzusaugen. Hierzu ist es üblich, die Pulverbeschichtungskabine mit einer Absaugkanalanordnung zu versehen, die beispielsweise einen im Kabinenunterbau angeordneten Absaugkanal aufweist, dessen erstes Ende über mindestens eine Absaugöffnung mit dem Kabineninnenraum strömungsmäßig verbunden ist.

Eine solche Pulverbeschichtungskabine ist beispielsweise aus der Druckschrift DE19549186 oder der EP 0 839 583 A2 bekannt. Hierbei handelt es sich um eine vertikalzylindrische Kabine mit einem trichterförmigen Kabinenboden, welcher im Kabinenzentrum einen Sauganschluss für eine externe Saugquelle hat.
Eine ähnliche zylindrische Pulverbeschichtungskabine ist auch aus der Druckschrift DE 195 00 872 A1 bekannt. Diese Pulverbeschichtungskabine hat zusätzlich zu dem als Absaugtrichter ausgebildeten Kabinenboden einen rinnenartigen Bodenrand entlang der Kabinenwand, über welchen getrennt vom Absaugstrom des Absaugtrichters ebenfalls Luft- und Pulverpartikel aus der Kabine absaugbar sind.

Aus der Druckschrift DE 198 37 877 A1 ist eine vertikal zylindrische Pulverbeschichtungskabine mit einer ebenen Bodenplatte bekannt. Durch die Bodenplatte erstreckt sich diametral ein Schlitz, in den aus dem Kabinenboden liegende Pulverpartikel durch eine rotierende Reinigungsvorrichtung geschoben werden können. Sprühbeschichtungspulver wird üblicherweise pneumatisch zu Sprühvorrichtungen, sogenannten Sprühpistolen gefördert und von diesen pneumatisch und durch elektrostatische Unterstützung auf die zu beschichtenden Objekte gesprüht. In den Pulverbeschichtungskabinen wird üblicherweise während des Sprühbeschichtungsbetriebes ein kleiner Unterdruck aufrechterhalten, damit keine Pulverpartikel aus der Pulverbeschichtungskabine nach außen dringen. Der während des Sprühbeschichtungsbetriebes in den Pulverbeschichtungskabinen üblicherweise aufrecht erhaltene Unterdruck dient ferner dazu, Überschusspulver, d.h. vom Objekt abprallende oder an ihm vorbei gesprühte Pulverpartikel, abzusaugen.

Bei Pulverbeschichtungskabinen der gattungsgemäßen Art wird Überschusspulver abgesaugt, um hohe Pulverkonzentrationen im Kabineninnenraum zu vermeiden, welche unter Umständen zu Pulverstaub-Explosionen führen können. Des Weiteren dient das Absaugen von Überschusspulver zur Rückgewinnung und Wiederverwertung des Pulvers.

Zur Rückgewinnung von überschüssigem Pulver, also Pulver, welches an dem zu beschichtenden Objekt vorbei gesprüht wurde oder vom Objekt abfällt, ist es bekannt, einen Pulverabscheider beispielsweise in Gestalt eines Fliehkraftabscheiders (Zyklon) strömungsmäßig über eine Absaugöffnung mit dem Kabineninnenraum der Pulverbeschichtungskabine zu verbinden. Ein Sauggebläse, welche beispielsweise an einem Luftauslass des Pulverabscheiders angeschlossen ist, saugt aus dem Kabineninnenraum der Pulverbeschichtungskabine zumindest ein Großteil des Überschusspulvers und Luft durch den Pulverabscheider hindurch ab. Das abgesaugte Pulver wird in dem Pulverabscheider von der Saugluft getrennt und in einen Pulverbehälter weitertransportiert, aus welchem es zusammen mit frischem Beschichtungspulver wieder einer Sprühvorrichtung zur Sprühbeschichtung von Objekten in der Pulverbeschichtungskabine zugeführt werden kann. Die in dem Pulverabscheider von dem abgesaugten Überschusspulver gereinigte Luft gelangt durch das Sauggebläse entweder in die Raumatmosphäre des Aufstellraums der Pulverbeschichtungskabine bzw. des Pulverabscheiders oder zu einem weiteren Filtersystem (Nach-Filter), in welchem gegebenenfalls noch in der Luft vorhandenen Pulverpartikel abgetrennt werden.

Insbesondere ist es bekannt, als Pulverabscheider zum Abtrennen von Pulver aus der Absaugluft ein Zyklon bzw. ein Zyklonsystem einzusetzen. Bei Verwendung eines Zyklonsystems, welches beispielsweise aus einem oder mehreren Zyklonen aufgebaut ist, saugt ein Sauggebläse Überschusspulver und Luft aus dem Kabineninnenraum durch das Zyklonsystem, wobei in dem Zyklonsystem die Pulver-Luft-Strömung durch Zyklon-Zentrifugalkräfte in Luft und Pulver getrennt wird. Das abgetrennte Pulver fällt in einen Auffangbehälter unter dem Zyklonsystem, während die von Pulver gereinigte Luft in der Regel über einen Nach-Filter in die Außenatmosphäre geblasen wird. Zyklonsysteme benötigen in der Regel einen solchen Nach-Filter, weil sie feine Pulverpartikel nicht so vollständig vom Luftstrom trennen können, wie es bei einem Filtersystem der Fall wäre. Das von dem Zyklonsystem ausgeschiedene Pulver wird in der Regel ebenfalls aufbereitet und wieder zur Sprühbeschichtung verwendet. Hingegen wird das von dem Nach-Filter ausgeschiedene Pulver in der Regel als Abfall behandelt.

Pulverbeschichtungskabinen, die für kurze Beschichtungszeiten mit einer bestimmten Pulversorte oder für häufige Wechsel der Pulversorte verwendet werden, sind häufig zylinderförmig ausgebildet, da die Reinigung von zylinderförmigen Pulverbeschichtungskabinen im Vergleich zu Pulverbeschichtungskabinen mit einem rechteckigen Kabineninnenraum schneller gereinigt werden können und somit einen schnellen Farbwechsel ermöglichen.

Unter dem hierin verwendeten Begriff "Farbwechsel" wird der Wechsel von einer Pulversorte auf eine andere Pulversorte, insbesondere auf eine andere Pulverfarbe, verstanden. Bei einer großen Farbpalette und kurzen Beschichtungsperioden für die einzelnen Pulversorten sind die Stillstandzeiten zum Reinigen der Pulverbeschichtungskabine und der zum Einsatz kommenden Pulverabscheider beim Wechsel von einer Pulversorte zu einer anderen Pulversorte häufig nicht unerheblich, infolge dessen der Betrieb der Pulverbeschichtungskabine zumindest dann kostspielig und ineffizient wird, wenn keine Haupt-Farbe während mehr als 50% der Betriebszeit der Pulverbeschichtungskabine eingesetzt wird.

Durch die Erfindung soll die Aufgabe gelöst werden, eine Möglichkeit anzugeben, mit welcher bei einer Pulverbeschichtungskabine auch dann ein Pulverwechsel schnell durchgeführt werden kann, wenn der Kabineninnenraum eine rechteckige Form aufweist.

Diese Aufgabe wird gemäß der Erfindung durch den Gegenstand des unabhängigen Patentanspruchs 1 gelöst, wobei vorteilhafte Weiterbildungen der erfindungsgemäßen Lösung in den Unteransprüchen angegeben sind.

Demgemäß betrifft die Erfindung insbesondere ein Verteilersystem für ein aus einer Pulverbeschichtungskabine abgesaugtes Luft-Pulver-Gemisch, wobei das Verteilersystem eine mit einem Absaugkanal der Pulverbeschichtungskabine strömungsmäßig verbundene oder verbindbare Wechslereinrichtung aufweist. Die Wechslereinrichtung ist ausgebildet, wahlweise den Absaugkanal der Pulverbeschichtungskabine strömungsmäßig mit dem Einlass einer ersten Rohgasleitung oder mit dem Einlass mindestens einer weiteren, zweiten Rohgasleitung zu verbinden. Die erste Rohgasleitung ist dabei einem ersten Pulverabscheider zugeordnet, während die mindestens eine zweite Rohgasleitung mindestens einem weiteren, zweiten Pulverabscheider zugeordnet ist.

Die Erfindung betrifft ferner ein Pulverbeschichtungssystem mit einer Pulverbeschichtungskabine und einem derartigen Verteilersystem.

Die erfindungsgemäße Lösung ermöglicht es, dass der Absaugkanal der Pulverbeschichtungskabine wahlweise mit verschiedenen Pulverabscheidern, wie etwa Zyklonsystemen und/oder Filtersystemen, strömungsmäßig verbunden werden kann. Auf diese Weise kann ein Pulverabscheider im Beschichtungsbetrieb mit einer ersten Pulversorte bzw. Pulverfarbe und ein weiterer (zweiter) Pulverabscheider im Beschichtungsbetrieb mit einer anderen Pulversorte bzw. Pulverfarbe verwendet werden, ohne dass ein Austausch des Pulverabscheiders oder eine intensive Reinigung des Pulverabscheiders hierzu erforderlich wäre, was nachteilig im Hinblick auf einen schnellen Pulverwechsel mit nur noch geringen Stillstandzeiten beim Pulverwechsel wäre.

In einer bevorzugten Realisierung des erfindungsgemäßen Verteilersystems ist vorgesehen, dass die Wechslereinrichtung einen in einem Verbindungskörper ausgebildeten Kanal aufweist, welcher durch Bewegen des Verbindungskörpers relativ zu dem Absaugkanal und/oder relativ zu den Einlässen der Rohgasleitungen gleichzeitig sowohl mit dem Absaugkanal als auch mit einem der Einlässe der Rohgasleitungen strömungsmäßig verbindbar ist. Hierfür würde es sich beispielsweise anbieten, wenn der Verbindungskörper mit dem darin ausgebildeten Kanal relativ zu dem Absaugkanal und/oder den Einlässen der Rohgasleitungen linear verschiebbar ausgeführt ist.
In diesem Zusammenhang wäre es insbesondere von Vorteil, wenn die Wechslereinrichtung eine dem Verbindungskörper zugeordnete Führung aufweist.
Alternativ hierzu ist es allerdings auch denkbar, wenn der Verbindungskörper mit dem darin ausgebildeten Kanal relativ zu dem Absaugkanal und/oder relativ zu den Einlässen der Rohgasleitungen verdrehbar (rotierbar) ist. Beispielsweise wäre es möglich, wenn die Wechslereinrichtung einen dem Verbindungskörper zugeordneten Revolvermechanismus aufweist, über den der Verbindungskörper relativ zu dem Absaugkanal und/oder relativ zu den Einlässen der Rohgasleitungen verdrehbar (rotierbar) ist.
Selbstverständlich kommen aber auch andere Ausführungsformen und Ausgestaltungen der Wechslereinrichtung in Frage.

In dem erfindungsgemäßen Verteilersystem ist ein mit dem Absaugkanal strömungsmäßig verbundener oder verbindbarer oder ein in dem Absaugkanal ausgebildeter Anschlussbereich vorgesehen, in welchem eine erste Auslassöffnung und mindestens eine weitere, zweite Auslassöffnung ausgebildet sind. Bei dieser Ausführungsform ist die Wechslereinrichtung ausgebildet, wahlweise die erste Auslassöffnung des Anschlussbereichs mit dem Einlass der ersten Rohgasleitung oder die mindestens eine zweite Auslassöffnung des Anschlussbereiches mit dem Einlass der mindestens einen zweiten Rohgasleitung strömungsmäßig zu verbinden.
In einer besonders bevorzugten Ausführungsform ist in diesem Zusammenhang vorgesehen, dass vorzugsweise jede Auslassöffnung des Anschlussbereiches einen entsprechend zugeordneten Verschluss aufweist, um die entsprechende Auslassöffnung bedarfsweise verschließen zu können, was insbesondere dann notwendig ist, wenn die Auslassöffnung nicht mit dem Einlass der zugeordneten Rohgasleitung strömungsmäßig verbunden ist.

Grundsätzlich ist es jedoch bevorzugt, wenn der Einlass von jeder Rohgasleitung axial im Hinblick auf eine der Rohgasleitung zugeordnete Auslassöffnung des Anschlussbereiches ausgebildet ist. Dann nämlich lässt sich die Wechslereinrichtung besonders einfach ausbilden.

Gemäß bevorzugten Ausführungsformen des erfindungsgemäßen Verteilersystems ist vorgesehen, dass der Einlass von vorzugsweise jeder Rohgasleitung oberhalb der der Rohgasleitung zugeordneten Auslassöffnung angeordnet ist. Auf diese Weise wird wirksam verhindert, dass versehentlich Fremdpulver in die Rohgasleitung und somit in den der Rohgasleitung zugeordneten Pulverabscheider gelangen kann.

Gemäß einem weiteren Aspekt der vorliegenden Erfindung ist vorgesehen, dass vorzugsweise jeder Einlass der Rohgasleitungen einen entsprechend zugeordneten Verschluss aufweist, um den Einlass bedarfsweise verschließen zu können. Dies ist insbesondere dann erforderlich, wenn der Einlass nicht mit dem Absaugkanal der Beschichtungskabine strömungsmäßig verbunden ist. Auf diese Weise ist es insbesondere möglich, dass gemeinsames Sauggebläse das Luft-Pulver-Gemisch aus der Pulverbeschichtungskabine und den entsprechenden Rohgasleitungen abgesaugt wird.

Im Einzelnen ist es in diesem Zusammenhang beispielsweise denkbar, wenn das Verteilersystem einen ersten Pulverabscheider und mindestens einen weiteren, zweiten Pulverabscheider aufweist, wobei ein Rohgas-Einlass des ersten Pulverabscheiders strömungsmäßig mit der ersten Rohgasleitung und ein Rohgas-Einlass des mindestens einen zweiten Pulverabscheiders strömungsmäßig mit der mindestens einen zweiten Rohgasleitung verbunden oder verbindbar ist. Vorzugsweise weist jeder Pulverabscheider ferner jeweils einen Reingas-Auslass auf, über den gereinigte Luft abführbar ist, wobei insbesondere jeder Reingas-Auslass der Pulverabscheider strömungsmäßig mit der Saugseite eines gemeinsamen Sauggebläses verbunden oder verbindbar ist. Bedarfsweise kann dem Sauggebläse ferner ein Filtersystem (Nach-Filter) zum Feinreinigen des Reingases strömungsmäßig nachgeschaltet sein.

Gemäß bevorzugten Ausführungsformen der vorliegenden Erfindung ist zumindest dem ersten Pulverabscheider ein Pulver-Rückführungssystem zugeordnet, um das in dem ersten Pulverabscheider abgetrennte Pulver zum Zwecke der Pulverbeschichtung rückzuführen (wieder zu verwenden).

Nachfolgend werden exemplarische Ausführungsformen des erfindungsgemäßen Verteilersystems anhand der beiliegenden Zeichnungen näher beschrieben.

Es zeigen:
- FIG. 1: schematisch ein Pulverbeschichtungssystem mit einem Verteilersystem gemäß der vorliegenden Erfindung;
- FIG. 2: eine exemplarische Ausführungsform des erfindungsgemäßen Verteilersystems in einer ersten isometrischen Darstellung;
- FIG. 3: die exemplarische Ausführungsform des Verteilersystems gemäß FIG. 2 in einer zweiten isometrischen Ansicht; und
- FIG. 4: eine exemplarische Ausführungsform einer Pulverabscheiderbaugruppe zur Verwendung mit dem erfindungsgemäßen Verteilersystem in einer isometrischen Darstellung.

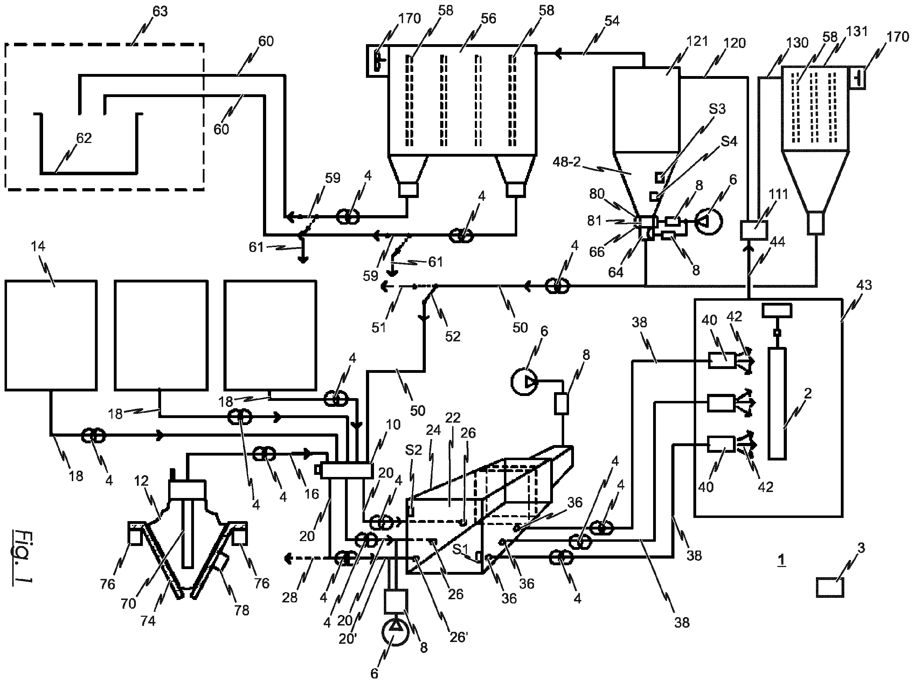

FIG. 1 zeigt schematisch eine exemplarische Ausführungsform einer Pulverbeschichtungsanlage 1 zum Sprühbeschichten von Gegenständen 2 mit Beschichtungspulver, welches danach in einem in FIG. 1 nicht dargestellten Wärmeofen auf die Gegenstände 2 aufgeschmolzen wird. Für die Steuerung der Funktion der Pulverbeschichtungsanlage 1 sind ein oder mehrere elektronische Steuergeräte 3 vorgesehen.

Zur pneumatischen Förderung des Beschichtungspulvers sind Pulverpumpen 4 vorgesehen. Dies können Pulverinjektoren sein, in welchen Beschichtungspulver mittels als Förderdruckluft dienender Druckluft aus einem Pulverbehälter angesaugt wird, wonach dann das Gemisch aus Förderdruckluft und Beschichtungspulver gemeinsam in einen Behälter oder zu einer Sprühvorrichtung strömt.

Geeignete Pulverinjektoren sind beispielsweise aus der Druckschrift EP 0 412 289 B1 bekannt.

Als Pulverpumpe 4 können auch solche Pumpenarten verwendet werden, welche kleine Pulverportionen mittels Druckluft nacheinander fördern, wobei jeweils eine kleine Pulverportion (Pulvermenge) in einer Pulverkammer gespeichert und dann mittels Druckluft aus der Pulverkammer herausgedrückt wird. Die Druckluft bleibt hinter der Pulverportion und schiebt die Pulverportion vor sich her. Diese Pumpenarten werden manchmal als Druckluftschubpumpen oder als Pfropfenförderungs-Pumpen bezeichnet, da die Druckluft die gespeicherte Pulverportion wie einen Pfropfen vor sich her durch eine Pumpenauslassleitung schiebt. Verschiedene Arten solcher Pulverpumpen zum Fördern von dichtem Beschichtungspulver sind beispielsweise aus folgenden Schriften bekannt: DE 103 53 968 A1, US 6,508,610 B2, US 2006/0193704 A1, DE 101 45 448 A1 oder WO 2005/051549 A1.

Die Erfindung ist nicht auf eine der genannten Arten von Pulverpumpen beschränkt.

Zur Erzeugung der Druckluft für die pneumatische Förderung des Beschichtungspulvers und zur Fluidisierung des Beschichtungspulvers ist eine Druckluftquelle 6 vorgesehen, welche über entsprechende Druckeinstellelemente 8, zum Beispiel Druckregler und/oder Ventile, an die verschiedenen Geräte angeschlossen ist.

Frischpulver von einem Pulverlieferanten wird aus einem Lieferantenbehältnis, was beispielsweise ein Kleinbehältnis 12 zum Beispiel in Form eines formstabilen Behälters oder eines Sackes mit einer Pulvermenge von beispielsweise zwischen 10 bis 50 kg, zum Beispiel 25 kg, oder zum Beispiel ein Großbehältnis 14, beispielsweise ebenfalls ein formstabiler Behälter oder ein Sack, mit einer Pulvermenge zwischen beispielsweise 100 kg und 1.000 kg sein kann, mittels einer Pulverpumpe 4 in einer Frischpulverleitung 16 oder 18 einer Siebvorrichtung 10 zugeführt. Die Siebvorrichtung 10 kann mit einem Vibrator versehen sein. In der folgenden Beschreibung bedeuten die Ausdrücke "Kleinbehälter" und "Großbehälter" jeweils sowohl "formstabiler Behälter" als auch "nicht-formstabiler, flexibler Sack", ausgenommen wenn ausdrücklich auf die eine oder die andere Behältnisart verwiesen wird.

Das von der Siebvorrichtung 10 gesiebte Beschichtungspulver wird durch Schwerkraft oder vorzugsweise jeweils durch eine Pulverpumpe 4 über eine oder mehrere Pulverzufuhrleitungen 20, 20' durch Pulvereinlassöffnungen 26, 26' in eine Pulverkammer 22 eines formstabilen Pulverbehälters 24 gefördert. Das Volumen der Pulverkammer 22 ist vorzugsweise wesentlich kleiner als das Volumen des Frischpulver-Kleinbehälters 12.

Gemäß einer denkbaren Realisierung der erfindungsgemäßen Lösung ist die Pulverpumpe 4 der mindestens einen Pulverzufuhrleitung 20, 20' zu dem Pulverbehälter 24 eine Druckluftschubpumpe. Hierbei kann der Anfangsabschnitt der Pulverzufuhrleitung 20 als Pumpenkammer dienen, in welche von der Siebvorrichtung 10 gesiebtes Pulver durch ein Ventil, zum Beispiel ein Quetschventil, fällt. Nachdem diese Pumpenkammer eine bestimmte Pulverportion enthält, wird die Pulverzufuhrleitung 20 durch Schließen des Ventils von der Siebvorrichtung 10 strömungsmäßig getrennt. Danach wird die Pulverportion mittels Druckluft durch die Pulverzufuhrleitung 20, 20' in die Pulverkammer 22 gestoßen.

An ein oder vorzugsweise mehrere Pulverauslassöffnungen 36 des Pulverbehälters 24 sind Pulverpumpen 4, zum Beispiel Pulverinjektoren, zur Förderung von Beschichtungspulver durch Pulverleitungen 38 zu Sprühvorrichtungen 40 angeschlossen. Die Sprühvorrichtungen 40 können Sprühdüsen oder Rotationszerstäuber zum Sprühen des Beschichtungspulvers 42 auf den zu beschichtenden Gegenstand 2 aufweisen, welcher sich vorzugsweise in einer Beschichtungskabine 43 befindet.

Die Pulverauslassöffnungen 36 können sich - wie in FIG. 1 dargestellt - in einer Wand des Pulverbehälters 24 befinden, welche der Wand gegenüberliegt, in welcher sich die Pulvereinlassöffnungen 26, 26' befinden. Alternativ hierzu ist es aber auch denkbar, wenn die Pulverauslassöffnungen 36 in einer Wand des Pulverbehälters 24 angeordnet sind, welche angrenzend zu der Wand ist, in welcher sich die Pulvereinlassöffnungen 26, 26' befinden. Die Pulverauslassöffnungen 36 sind vorzugsweise nahe dem Boden der Pulverkammer 22 angeordnet.

Die Pulverkammer 22 hat vorzugsweise eine Größe, die im Bereich eines Fassungsvermögens an Beschichtungspulver zwischen 1,0 kg und 12,0 kg liegt, vorzugsweise zwischen 2,0 kg und 8,0 kg. Gemäß anderen Gesichtspunkten beträgt die Größe der Pulverkammer 22 vorzugsweise zwischen 500 cm³ und 30.000 cm³, vorzugsweise zwischen 2.000 cm³ und 20.000 cm³. Die Größe der Pulverkammer 22 wird in Abhängigkeit von der Anzahl der Pulverauslassöffnungen 36 und der daran angeschlossenen Pulverleitungen 38 derart gewählt, dass ein kontinuierlicher Sprühbeschichtungsbetrieb möglich ist, jedoch die Pulverkammer 22 in Beschichtungspausen für einen Pulverwechsel schnell gereinigt werden kann, vorzugsweise automatisch.

Die Pulverkammer 22 kann mit einer Fluidisiereinrichtung 30 zum Fluidisieren des im Pulverbehälter 24 aufgenommenen Beschichtungspulvers versehen werden. Die Fluidisiereinrichtung 30 enthält mindestens eine Fluidisierwand aus einem offenporigen oder mit engen Bohrungen versehenen Material, welches für Druckluft, jedoch nicht für Beschichtungspulver durchlässig ist.

Obwohl in FIG. 1 nicht gezeigt, ist es von Vorteil, wenn bei dem Pulverbehälter 24 die Fluidisierwand den Boden des Pulverbehälters 24 ausbildet und zwischen der Pulverkammer 22 und einer Fluidisier-Druckluftkammer angeordnet ist. Die Fluidisier-Druckluftkammer sollte über ein Druckeinstellelement 8 mit der Druckluftquelle 6 verbindbar sein.

Beschichtungspulver 42, welches nicht an dem zu beschichtenden Gegenstand 2 haftet, wird als Überschusspulver über eine Überschusspulverleitung bzw. Absaugkanal 44 mittels eines Saugluftstromes eines Gebläses 170 wahlweise in einen von hier insgesamt zwei zur Verfügung stehenden Pulverabscheidern 121, 131 gesaugt. Das Überschusspulver wird in dem betreffenden Pulverabscheider 121, 131 soweit wie möglich vom Saugluftstrom getrennt. Der getrennte Pulveranteil kann dann als Rückgewinnungspulver bzw. Recoverypulver von dem betreffenden Pulverabscheider 121, 131 über eine Pulverrückgewinnungsleitung 50 zu der Siebvorrichtung 10 geleitet, wo es durch die Siebvorrichtung 10 hindurch, entweder allein oder vermischt mit Frischpulver über die Pulverzufuhrleitungen 20, 20' wieder in die Pulverkammer 22 gelangt. In der in FIG. 1 schematisch dargestellten Ausführungsform ist nur der mit der Bezugsziffer "121" bezeichnete (erste) Pulverabscheider mit einer entsprechenden Pulverrückgewinnungsleitung 50 versehen.

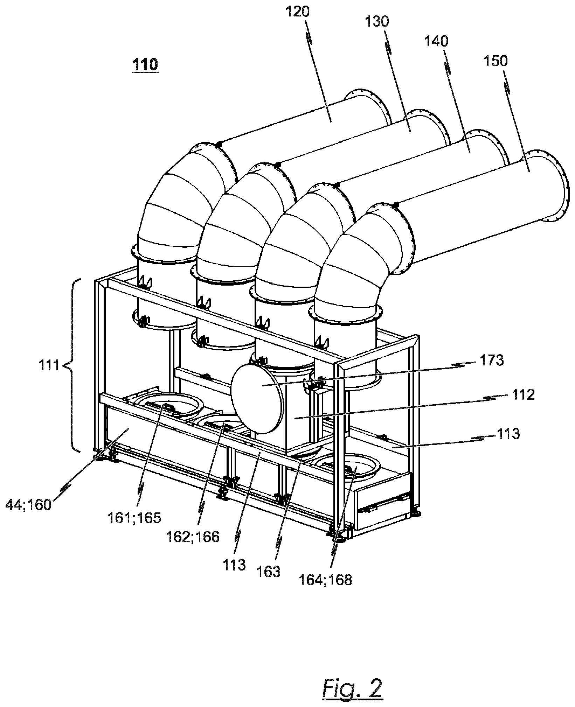

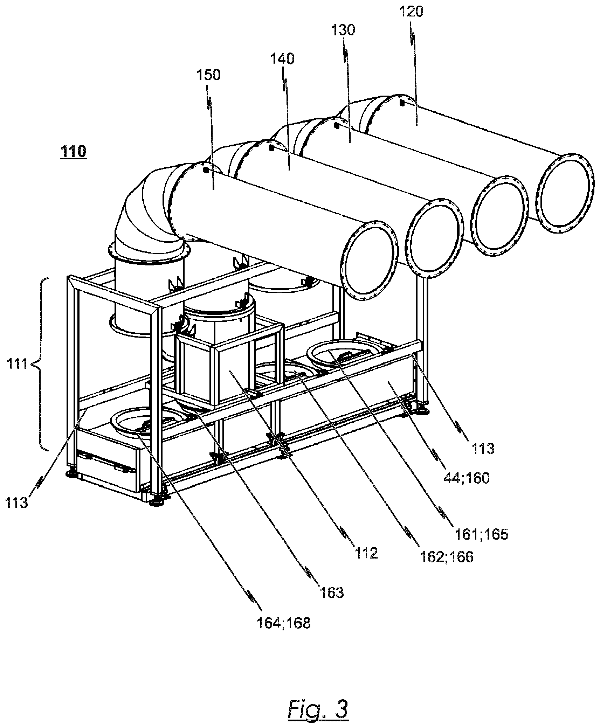

Wie es anschließend unter Bezugnahme auf die Darstellung in FIG. 2 und FIG. 3 näher beschrieben wird, ist eine mit einem Absaugkanal 44 der Pulverbeschichtungskabine 43 strömungsmäßig verbundene oder verbindbare Wechseleinrichtung 111 vorgesehen. Die Wechslereinrichtung 111 ist ausgebildet, wahlweise den Absaugkanal 44 der Pulverbeschichtungskabine 43 strömungsmäßig mit dem Einlass einer ersten Rohgasleitung 120 oder mit dem Einlass mindestens einer weiteren, zweiten Rohgasleitung 130 zu verbinden. Bei der in FIG. 1 dargestellten Ausführungsform ist die erste Rohgasleitung 120 dem ersten Pulverabscheider 121 und die mindestens eine zweite Rohgasleitung 130 mindestens einem zweiten Pulverabscheider 131 zugeordnet ist.

Je nach Pulversorte und/oder Pulververschmutzungsgrad kann auch die Möglichkeit vorgesehen werden, die Pulverrückgewinnungsleitung 50 von der Siebvorrichtung 10 zu trennen und das Rückgewinnungspulver (Recoverypulver) in einen Abfallbehälter zu leiten, wie dies in FIG. 1 durch eine gestrichelte Linie 51 schematisch dargestellt ist. Die Pulverrückgewinnungsleitung 50 kann, damit sie nicht von der Siebvorrichtung 10 getrennt zu werden braucht, mit einer Weiche 52 versehen werden, an welche sie alternativ mit der Siebvorrichtung 10 oder mit einem Abfallbehälter verbindbar ist.

Der Pulverbehälter 24 kann einen oder mehrere, beispielsweise zwei Sensoren S1 und/oder S2 aufweisen, um die Zufuhr von Beschichtungspulver in die Pulverkammer 22 mittels des Steuergerätes 3 und der Pulverpumpen 4 in den Pulverzuleitungen 20, 20' zu steuern. Beispielsweise detektiert der untere Sensor S1 ein unteres Pulverniveaulimit und der obere Sensor S2 ein oberes Pulverniveaulimit.

Der untere Endabschnitt 48-2 des ersten Pulverabscheiders 121 kann als Vorratsbehälter für Rückgewinnungspulver ausgebildet und verwendet werden und hierfür mit einem oder mehreren, beispielsweise zwei Sensoren S3 und/oder S4 versehen werden, welche funktionsmäßig mit dem Steuergerät 3 verbunden sind. Dadurch kann beispielsweise automatisch die Frischpulverzufuhr durch die Frischpulverzuleitungen 16 und 18 gestoppt werden, solange im ersten Pulverabscheider 121 ausreichend Rückgewinnungspulver vorhanden ist, um der Pulverkammer 22 durch die Siebvorrichtung 10 hindurch Rückgewinnungspulver in ausreichender Menge zuzuführen, welche für den Sprühbeschichtungsbetrieb mittels der Sprühvorrichtungen 40 erforderlich ist. Wenn im ersten Pulverabscheider 121 hierfür nicht mehr ausreichend Rückgewinnungspulver vorhanden ist, kann automatisch auf die Zufuhr von Frischpulver durch die Frischpulverzuleitungen 16 oder 18 umgeschaltet werden. Ferner besteht auch die Möglichkeit, Frischpulver und Rückgewinnungspulver gleichzeitig der Siebvorrichtung 10 zuzuführen, so dass sie miteinander vermischt werden.

Die Abluft der Pulverabscheider 121, 131 gelangt über eine Abluftleitung 54 in eine Nachfiltervorrichtung 56 und darin durch ein oder mehrere Filterelemente 58 zu dem Gebläse 170 und nach diesem in die Außenatmosphäre. Die Filterelemente 58 können Filtersäcke oder Filterpatronen oder Filterplatten oder ähnliche Filterelemente sein. Das mittels der Filterelemente 58 vom Luftstrom getrennte Pulver ist normalerweise Abfallpulver und fällt durch Schwerkraft in einen Abfallbehälter oder kann, wie in FIG. 1 gezeigt, über eine oder mehrere Abfallleitungen 60, welche jeweils eine Pulverpumpe 4 enthalten, in einen Abfallbehälter 62 an einer Abfallstation 63 gefördert werden.

Je nach Pulverart und Pulverbeschichtungsbedingungen kann das Abfallpulver auch wieder zurückgewonnen werden zur Siebvorrichtung 10, um erneut in den Beschichtungskreislauf zu gelangen. Dies ist in FIG. 1 durch Weichen 59 und Zweigleitungen 61 der Abfallleitungen 60 schematisch dargestellt.

Beim Mehrfarbenbetrieb, bei welchem verschiedene Farben jeweils nur kurze Zeit versprüht werden, werden üblicherweise mehrere (unterschiedliche) Pulverabscheider 121, 131 und eine Nachfiltervorrichtung 56 verwendet und das Abfallpulver der Nachfiltervorrichtung 56 gelangt in den Abfallbehälter 62. Der Pulverabscheide-Wirkungsgrad der Pulverabscheider 121, 131 ist - zumindest wenn diese als Fliehkraftabscheider (Zyklonabscheider) ausgebildet sind - zwar meistens geringer als der der Nachfiltervorrichtung 56, jedoch kann mit der Wechslereinrichtung 111 je nach Pulversorte zwischen den Pulverabscheidern 121, 131 umgewechselt werden.

Bei der in FIG. 1 schematisch dargestellten Ausführungsform ist der mit der Bezugsziffer "121" bezeichnete Pulverabscheider als Fliehkraftabscheider (Zyklonabscheider) ausgeführt, dem ferner ein Pulver-Rückführungssystem zugeordnet ist. Der als Fliehkraftabscheider ausgeführte Pulverabscheider 121 ist - wie in FIG. 1 schematisch angedeutet - stromabwärts mit einer vorzugsweise als Platten- bzw. Patronenabscheider ausgeführten Nachfiltervorrichtung 56 verbunden.

Hingegen ist der weitere in FIG. 1 schematisch dargestellte und mit der Bezugsziffer "131" bezeichnete Pulverabscheider beispielsweise als Platten- bzw. Patronenabscheider ausgeführt und mit einem entsprechenden Sauggebläse 170 versehen. Diesem als Platten- bzw. Patronenabscheider ausgeführten Pulverabscheider 131 ist ebenfalls ein Pulver-Rückführungssystem zugeordnet, wie es in FIG. 1 schematisch angedeutet ist.

Wie in FIG. 1 angedeutet, kann das untere Ende zumindest des ersten Pulverabscheiders 121 ein Auslassventil 64, beispielsweise ein Quetschventil aufweisen. Ferner kann oberhalb von diesem Auslassventil 64, im oder am unteren Ende des als Vorratsbehälter ausgebildeten unteren Endabschnittes 48-2 des Pulverabscheiders 121 eine Fluidisiereinrichtung 66 zum Fluidisieren des Beschichtungspulvers vorgesehen sein. Die Fluidisiereinrichtung 66 enthält mindestens eine Fluidisierwand 80 aus einem offenporigen oder mit engen Bohrungen versehenen Material, welches für Druckluft, jedoch nicht für Beschichtungspulver durchlässig ist. Die Fluidisierwand 80 ist zwischen dem Pulverweg und einer Fluidisier-Druckluftkammer 81 angeordnet. Die Fluidisier-Druckluftkammer 81 ist über ein Druckeinstellelement 8 mit der Druckluftquelle 6 verbindbar.

Die Frischpulverleitung 16 und/oder 18 kann an ihrem stromaufwärtigen Ende, entweder direkt oder durch die Pulverpumpe 4, mit einem Pulverförderrohr 70 strömungsmäßig verbunden sein, welches in den Lieferantenbehälter 12 oder 14 eintauchbar ist zum Absaugen von frischem Beschichtungspulver. Die Pulverpumpe 4 kann am Anfang, am Ende oder dazwischen in der Frischpulverleitung 16 bzw. 18 oder am oberen oder unteren Ende des Pulverförderrohres 70 angeordnet werden.

FIG. 1 zeigt als Frischpulver-Kleinbehälter einen Frischpulver-Pulversack 12 in einem Sackaufnahmetrichter 74. Der Pulversack 12 wird von dem Sackaufnahmetrichter 74 in einer definierten Form gehalten, wobei die Sacköffnung sich am oberen Sackende befindet. Der Sackaufnahmetrichter 74 kann auf einer Waage oder Wägesensoren 76 angeordnet werden. Diese Waage oder die Wägesensoren 76 können, je nach Art, eine optische Anzeige und/oder ein elektrisches Signal erzeugen, welches nach Abzug des Gewichts des Sackaufnahmetrichters 74 dem Gewicht und damit auch der Menge des Beschichtungspulvers in dem Kleinbehälter 12 entspricht. Am Sackaufnahmetrichter 74 ist vorzugsweise mindestens ein in vibrierender Vibrator 78 angeordnet.

Es können zwei oder mehr Kleinbehälter 12 jeweils in einem Sackaufnahmetrichter 74 und/oder zwei oder mehr Großbehältnisse 14 vorgesehen werden, die alternativ benutzbar sind. Dadurch ist ein schneller Wechsel von einem auf einen anderen Kleinbehälter 12 oder Großbehältnis 14 möglich.

Obwohl in FIG. 1 nicht dargestellt, ist es grundsätzlich denkbar, dass die Siebvorrichtung 10 in dem Pulverbehälter 24 integriert ist. Ferner kann die Siebvorrichtung 10 weggelassen werden, wenn das Frischpulver eine ausreichend gute Qualität hat. In diesem Fall besteht ferner die Möglichkeit, zum Sieben des Rückgewinnungspulvers der Leitungen 44 und 50 ein separates Sieb zu verwenden, zum Beispiel stromaufwärts oder stromabwärts des ersten Pulverabscheiders 121 oder im Pulverabscheider 121 selber. Auch das Rückgewinnungspulver benötigt dann kein Sieb, wenn seine Pulverqualität für eine Wiederverwendung ausreichend gut ist.

Nachfolgend wird unter Bezugnahme auf die Darstellungen in den FIGS. 2 und 3 eine exemplarische Ausführungsform des erfindungsgemäßen Verteilersystems 110 näher beschrieben. Das Verteilersystem 110 dieser exemplarischen Ausführungsform dient insbesondere zum Reinigen eines aus einer in FIG. 2 und FIG. 3 nicht dargestellt Pulverbeschichtungskabine, beispielsweise der in FIG. 1 gezeigten Pulverbeschichtungskabine 43 abgesaugten Luft-Pulver-Gemisch.

Zu diesem Zweck ist vorgesehen, dass das Verteilersystem 110 eine mit einem Absaugkanal 44 der Pulverbeschichtungskabine 43 strömungsmäßig verbundene oder verbindbare Wechseleinrichtung 111 aufweist.

Die Wechslereinrichtung 111 der dargestellten Ausführungsform ist insbesondere ausgebildet, wahlweise den Absaugkanal 44 der Pulverbeschichtungskabine 43 strömungsmäßig mit dem Einlass einer ersten Rohgasleitung 120 oder mit dem Einlass mindestens einer weiteren, zweiten Rohgasleitung 130, 140, 150 zu verbinden.

Bei der in FIG. 2 dargestellten Ausführungsform kommen insgesamt drei weitere (zweite) Rohgasleitungen 130, 140, 150 zum Einsatz, wobei allerdings die spezielle Anzahl der weiteren (zweiten) Rohgasleitungen 130, 140, 150 nicht als einschränkend anzusehen ist.

Unter dem hierin verwendeten Begriff "Rohgas" ist insbesondere die aus der Pulverbeschichtungskabine abgesaugte, pulverhaltige Luft zu verstehen. Es handelt sich dabei um ein Luft-Pulver-Gemisch, welches über einen entsprechenden Abscheider und/oder Filter zu "reinigen" ist, wobei bei dieser "Reinigung" eine Absonderung der in dem Luft-Pulver-Gemisch enthaltenen festen Partikel (Pulver) erfolgt.

Zu diesem Zweck ist bei der in Fig. 2 dargestellten exemplarischen Ausführungsform der erfindungsgemäßen Wechslereinrichtung 111 vorgesehen, dass die erste Rohgasleitung 120 einem ersten Pulverabscheider, beispielsweise dem in FIG. 1 als Fliehkraftabscheider ausgeführten Pulverabscheider 121, und die mindestens eine zweite Rohgasleitung 130, 140, 150 mindestens einem zweiten Pulverabscheider 131 zugeordnet ist. Der mindestens zweite Pulverabscheider 131 kann - wie beispielsweise in FIG. 1 angedeutet - insbesondere als Platten- bzw. Patronenabscheider ausgeführt sein.

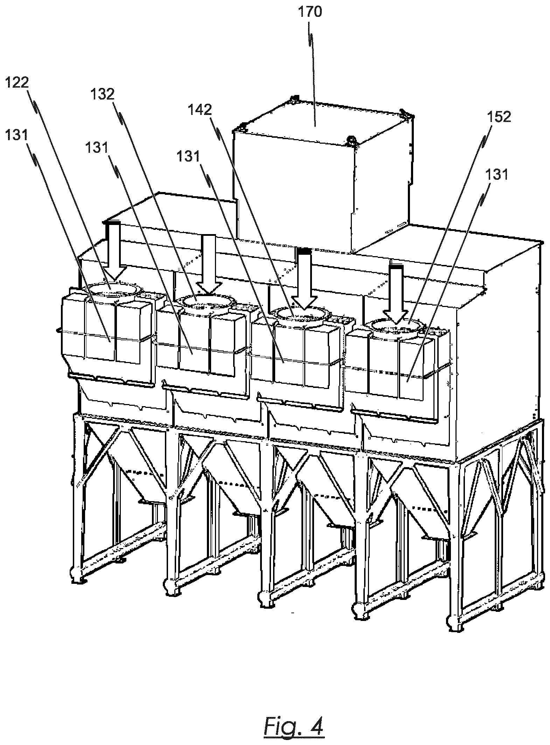

Entsprechende in einer Baugruppe angeordnete Pulverabscheider 131 sind in einer isometrischen Darstellung in FIG. 4 gezeigt. Die einzelnen Pulverabscheider 131 dieser Baugruppe sind für die Verwendung mit der in FIG. 2 oder FIG. 3 gezeigten Wechslereinrichtung 111 ausgebildet.

Im Einzelnen weist - wie es der Darstellung in FIG. 4 entnommen werden kann - jeder Pulverabscheider 131 der Baugruppe ein Rohgas-Einlass 122, 132, 142, 152 auf, über den dem entsprechenden Pulverabscheider 131 das zu reinigende Rohgas zuführbar ist.

Bei der Verwendung der in FIG. 4 gezeigten Pulverabscheider 131 mit der in FIG. 2 oder FIG. 3 gezeigten Wechslereinrichtung 111 ist der Rohgas-Einlass 122 eines ersten Pulverabscheiders strömungsmäßig mit der ersten Rohgasleitung 120 des Verteilersystems 110 und ein Rohgas-Einlass 132, 142, 152 des mindestens einen zweiten Pulverabscheiders strömungsmäßig mit der mindestens einen zweiten Rohgasleitung 130, 140, 150 des Verteilersystems 110 verbunden oder verbindbar ist.

Bei der in FIG. 4 gezeigten exemplarischen Ausführungsform weist ferner jeder Pulverabscheider 131 jeweils ein Reingas-Auslass aufweist, über den die zuvor in dem entsprechenden Pulverabscheider 131 gereinigte Luft abführbar ist. Vorzugsweise ist dabei jeder Reingas-Auslass der Pulverabscheider 131 strömungsmäßig mit der Saugseite eines gemeinsamen Sauggebläses 170 verbunden oder verbindbar ist.

Obwohl in FIG. 4 nicht dargestellt, ist es in diesem Zusammenhang denkbar, wenn dem Sauggebläse 170 ein Nach-Filtersystem zum Feinreinigen des Reingases strömungsmäßig nachgeschaltet ist.

Obwohl in FIG. 4 nicht dargestellt, ist es insbesondere denkbar, wenn mindestens eine Rohgasleitung 120, 130, 140, 150 nicht strömungsmäßig mit einem als Platten- bzw. Patronenfilter (Pulverabscheider 131) verbunden ist, sondern stattdessen mit einem als Fliehkraft- bzw. Zyklonabscheider ausgeführten Pulverabscheider, wie beispielsweise der in FIG. 1 mit der Bezugsziffer "121" bezeichnete Pulverabscheider. In diesem Fall sollte dann dieser als Fliehkraft- bzw. Zyklonabscheider ausgeführte Pulverabscheider 121 stromabwärts mit einem Platten- bzw. oder Patronenabscheider strömungsmäßig verbunden sein, wie es in FIG. 1 schematisch angedeutet ist.

Aus dem Fachgebiet der Abgasreinigung sind Zyklonabscheider allgemein bekannt und dienen zur Absonderung von beispielsweise in einem Pulver-Luft-Gemischstrom enthaltenen festen Partikeln. Bei einem Zyklonabscheider wird der zu behandelnde Gemischstrom im Gegensatz zu einer Zentrifuge durch seine eigene Strömungsgeschwindigkeit und eine entsprechende konstruktive Gestaltung des Abscheiders in eine Drehbewegung versetzt. Die auf die Pulverpartikel des Gemischstromes wirkenden Zentrifugalkräfte beschleunigen diese radial nach außen und werden dadurch vom Gasstrom getrennt, der im Zyklonabscheider nach innen geleitet und abgeführt wird.

Ein Zyklonabscheider besteht im Wesentlichen aus einem Einlaufbereich beispielsweise in Gestalt eines zylindrischen Behälters, wobei sich unterhalb des Einlaufbereiches ein Abscheidebereich mit einem konischen Endbereich aufweist, in welchem die Fliehkraftabscheidung von zumindest einem Teil des im Gemischstrom enthaltenen Pulvers erfolgt. Dem Einlaufbereich des Zyklonabscheiders wird der zu behandelnde Pulver-Luft-Gemischstrom tangential zugeführt. Hierfür sind verschiedene Einlaufgeometrien denkbar, wie beispielsweise ein Spiraleinlauf, ein Tangentialeinlauf, ein Wendeleinlauf oder ein Axialeinlauf.

Durch die Einlaufgeometrien wird eine Drehströmung des Gemischstromes im Inneren des Zyklonabscheiders erzeugt. Durch die sich ausbildende Wirbelströmung sedimentieren die aus dem Gemischstrom abzuscheidenden Pulverpartikel infolge der auf sie wirkenden Zentrifugalkräfte zur äußeren Wand des Abscheidebereiches und werden mit der Wandgrenzschichtströmung in spiralförmigen Bahnen entlang des am unteren Endbereich des Abscheidebereiches ausgebildeten Konus nach unten in einen Pulversammelbereich gefördert. Die Gasströmung wird dadurch gezwungen, nach oben umzukehren. Das Gas verlässt den Zyklonabscheider in Form einer Radialströmung von außen nach innen und strömt durch ein sogenanntes Tauchrohr am Kopfbereich des Zyklonabscheiders nach oben. Das Tauchrohr ist ein wichtiges Bauteil des Zyklonabscheiders, da dessen Durchmesser die im Zyklonabscheider auftretende Zentrifugalkraft und damit die Abscheideleistung sowie den Druckverlust bestimmt. Die anderen Abmessungen der Bereiche des Zyklonabscheiders werden dem Tauchrohr angepasst.

Die Bauformen von Zyklonabscheidern unterscheiden sich im Wesentlichen durch die Einlaufgeometrien. Die gebräuchlichsten Einlaufgeometrien sind der Spiraleinlauf sowie der Tangentialeinlauf, auch Schlitzeinlauf genannt. Da beide von der Abscheideleistung her gleichwertig sind, wird häufig dem einfacheren Tangentialeinlauf der Vorzug gegeben. Der Axialeinlauf ist aus Platzgründen teilweise bauseits erforderlich. Er eignet sich besonders für große Gasdurchsätze bei etwas geringeren Abscheideleistungen.

Ein Zyklonabscheider der hierin berücksichtigten Art ist beispielsweise aus der Druckschrift DE 10 2008 056 369 A1 bekannt. Es handelt sich dabei insbesondere um einen Zyklonabscheider zum Abscheiden von Beschichtungspulver aus einem Pulver-Luft-Gemischstrom.

Gemäß Ausführungsformen der vorliegenden Erfindung ist vorgesehen, dass das in dem Abscheidebereich des Zyklonabscheiders abgeschiedene Pulver wieder einer Pulversprühbeschichtungsanlage als Rückgewinnungspulver zugeführt wird. Bevor das aus dem Pulver-Luft-Gemischstrom abgeschiedene und somit rückgewonnene Pulver als Rückgewinnungspulver in einer Pulverbeschichtungsanlage - entweder rein oder mit Frischpulver vermischt - wiederverwendet werden kann, ist unter Umständen eine Aufbereitung des Rückgewinnungspulver erforderlich, damit dieses eine ausreichend gute Qualität aufweist. Hierzu gehört unter anderem auch das Sieben des Rückgewinnungspulvers in einer Siebvorrichtung, um von dem rückgewonnenen Beschichtungspulver grobkörnige Verunreinigungen abtrennen zu können.

Zu diesem Zweck ist es denkbar, stromaufwärts oder stromabwärts des Zyklonabscheiders eine geeignete Siebvorrichtung beispielsweise in Gestalt eines separaten Siebes einzusetzen. Des Weiteren besteht grundsätzlich die Möglichkeit, in dem Zyklonabscheider selber ein Sieb zum Sieben des aus dem Pulver-Luft-Gemischstrom abgeschiedenen Pulvers vorzusehen.

Wie es beispielsweise in FIG. 1 schematisch dargestellt ist, ist vorzugsweise dem ersten Pulverabscheider 121 ein Pulver-Rückführungssystem zugeordnet zum Rückführen von in dem ersten Pulverabscheider 121 abgetrennten Pulver zu den Sprühvorrichtungen 40. Selbstverständlich ist es aber auch denkbar, wenn alternativ oder zusätzlich hierzu auch dem mindestens einen zweiten Pulverabscheider 131 ein entsprechendes Pulver-Rückführungssystem zugeordnet ist.

Wie bereits im Zusammenhang mit der in FIG. 2 oder FIG. 3 dargestellten exemplarischen Ausführungsform der erfindungsgemäßen Wechslereinrichtung 111 ausgeführt, ist diese ausgebildet, wahlweise den mit dem Inneren einer Pulverbeschichtungskabine kommunizierenden Absaugkanal strömungsmäßig mit dem Einlass der ersten Rohgasleitung 120 oder mit dem Einlass der mindestens einen weiteren, zweiten Rohgasleitung 130, 140, 150 zu verbinden. Hierzu ist bei der in FIG. 2 oder FIG. 3 dargestellten exemplarischen Ausführungsform der erfindungsgemäßen Wechslereinrichtung 111 vorgesehen, dass diese einen in einem Verbindungskörper 112 ausgebildeten (Strömungs-)Kanal aufweist, welcher durch Bewegen des Verbindungskörpers 112 relativ zu dem Absaugkanal 44 und/oder relativ zu den Einlässen der Rohgasleitungen 120, 130, 140, 150 gleichzeitig sowohl mit dem Absaugkanal 44 als auch mit einem der Einlässe der Rohgasleitungen 120, 130, 140, 150 strömungsmäßig verbindbar ist.

Im Einzelnen ist bei der in FIG. 2 oder FIG. 3 dargestellten exemplarischen Ausführungsform der erfindungsgemäßen Wechslereinrichtung 111 vorgesehen, dass der Verbindungskörper 112 mit dem darin ausgebildeten Kanal relativ zu dem Absaugkanal 44 und/oder den Einlässen der Rohgasleitungen 120, 130, 140, 150 linear verschiebbar ausgeführt ist. Vorzugsweise weist hierzu die Wechslereinrichtung 111 eine dem Verbindungskörper 112 zugeordnete Führung 113 auf.

Alternativ hierzu ist es aber auch denkbar, wenn der Verbindungskörper 112 der Wechslereinrichtung 111 mit dem darin ausgebildeten Kanal relativ zu dem Absaugkanal 44 und/oder relativ zu den Einlässen der Rohgasleitungen 120, 130, 140, 150 verdrehbar/rotierbar ausgeführt ist. In diesem Zusammenhang wäre es beispielsweise denkbar, wenn die Wechslereinrichtung 111 einen dem Verbindungskörper 112 zugeordneten Revolvermechanismus aufweist, über den der Verbindungskörper 112 relativ zu dem Absaugkanal 44 und/oder relativ zu den Einlässen der Rohgasleitungen 120, 130, 140, 150 verdrehbar ist.

Bei der in FIG. 2 oder FIG. 3 dargestellten exemplarischen Ausführungsform der erfindungsgemäßen Wechslereinrichtung 111 ist vorgesehen, dass ein Endbereich des Absaugkanals 44 als Anschlussbereich 160 ausgeführt ist, in welchem eine erste Auslassöffnung 161 und mindestens eine weitere, zweite Auslassöffnung 162, 163, 164 ausgebildet sind. Bei der dargestellten exemplarischen Ausführungsform ist dabei die Wechslereinrichtung 111 ausgebildet, wahlweise die erste Auslassöffnung 161 des Anschlussbereichs 160 mit dem Einlass der ersten Rohgasleitung 120 oder die mindestens eine zweite Auslassöffnung 162, 163, 164 des Anschlussbereichs 160 mit dem Einlass der mindestens einen zweiten Rohgasleitung 120, 130, 140, 150 strömungsmäßig zu verbinden.

Vorzugsweise weist dabei jede Auslassöffnung 161, 162, 163, 164 des Anschlussbereichs 160 einen entsprechend zugeordneten Verschluss/Deckel 165, 166, 167, 168 auf zum bedarfsweisen Verschließen der entsprechenden Auslassöffnung 161, 162, 163, 164. Dies ist insbesondere dann sinnvoll, wenn die entsprechende Auslassöffnung 161, 162, 163, 164 nicht mit dem Einlass der zugeordneten Rohgasleitung 120, 130, 140, 150 strömungsmäßig verbunden ist.

Der Darstellung in FIG. 2 oder in FIG. 3 ist ferner zu entnehmen, dass der Einlass von jeder Rohgasleitung 120, 130, 140, 150 axial im Hinblick auf eine der Rohgasleitung 120, 130, 140, 150 zugeordnete Auslassöffnung 161, 162, 163, 164 des Anschlussbereichs 160 ausgebildet ist. Ferner ist der Einlass von jeder Rohgasleitung 120, 130, 140, 150 oberhalb der der Rohgasleitung 120, 130, 140, 150 zugeordneten Auslassöffnung 161, 162, 163, 164 angeordnet.

Wie es den Darstellungen in FIG. 2 und FIG. 3 ferner entnommen werden kann weist jeder Einlass der Rohgasleitungen 120, 130, 140, 150 einen entsprechend zugeordneten Verschluss/Deckel 171, 172, 173, 174 auf zum bedarfsweisen Verschließen des entsprechenden Einlasses, insbesondere dann, wenn der Einlass nicht mit dem Absaugkanal 44 der Pulverbeschichtungskabine 43 strömungsmäßig verbunden ist. Insbesondere ist es von Vorteil, dass - sofern nach dem Verteilersystem 110 ein als Zyklonabscheider ausgebildeter Pulverabscheider folgt - dieser stromabwärts mit einem Platten- bzw. Patronenfilter ausgeführten weiteren Pulverabscheider verbunden ist. Hierbei erfolgt die Pulverrückgewinnung üblicherweise nur unterhalb des als Zyklonabscheider ausgeführten Pulverabscheiders.

Ein solcher Zyklonabscheider kommt insbesondere bei dem sogenannten Mehrfarbenbetrieb zum Einsatz, bei welchem möglichst schnell die Pulverfarbe bzw. Pulverart gewechselt werden kann.

Bei einem Einfarbenbetrieb hingegen folgt nach dem Verteilersystem üblicherweise nur ein als Platten- bzw. Patronenfilter ausgeführter Pulverabscheider mit einer entsprechenden Pulverrückforderung. Die Verwendung des erfindungsgemäßen Verteilersystems erlaubt nun darüber hinaus die Kombination von beispielsweise viermal Einfarbenbetrieb oder auch denkbar dreimal Einfarbenbetrieb und einmal Mehrfarbenbetrieb.
Die Erfindung ist nicht auf die in den Zeichnungen gezeigten exemplarischen Ausführungsformen beschränkt, sondern ergibt sich aus den in den Ansprüchen offenbarten Merkmalen.

## Patentansprüche

1. Verteilersystem (110) für ein aus einer Pulverbeschichtungskabine (43) abgesaugtes Luft-Pulver-Gemisch, wobei das Verteilersystem (110) eine mit einem Absaugkanal (44) der Pulverbeschichtungskabine (43) strömungsmäßig verbundene oder verbindbare Wechslereinrichtung (111) aufweist, welche ausgebildet ist, wahlweise den Absaugkanal (44) strömungsmäßig mit dem Einlass einer ersten Rohgasleitung (120) oder mit dem Einlass mindestens einer weiteren, zweiten Rohgasleitung (130, 140, 150) zu verbinden, wobei die erste Rohgasleitung (120) einem ersten Pulverabscheider (121) und die mindestens eine zweite Rohgasleitung (130, 140, 150) mindestens einem zweiten Pulverabscheider (131) zugeordnet ist
**dadurch gekennzeichnet, dass**
ein mit dem Absaugkanal (44) strömungsmäßig verbundener oder verbindbarer oder ein in dem Absaugkanal (44) ausgebildeter Anschlussbereich (160) vorgesehen ist, in welchem eine erste Auslassöffnung (161) und mindestens eine weitere, zweite Auslassöffnung (162, 163, 164) ausgebildet sind, wobei die Wechslereinrichtung (111) ausgebildet ist, wahlweise die erste Auslassöffnung (161) des Anschlussbereichs (160) mit dem Einlass der ersten Rohgasleitung (120) oder die mindestens eine zweite Auslassöffnung (162, 163, 164) des Anschlussbereichs (160) mit dem Einlass der mindestens einen zweiten Rohgasleitung (120, 130, 140, 150) strömungsmäßig zu verbinden.

2. Verteilersystem (110) nach Anspruch 1,
wobei die Wechslereinrichtung (111) einen in einem Verbindungskörper (112) ausgebildeten Kanal aufweist, welcher durch Bewegen des Verbindungskörpers (112) relativ zu dem Absaugkanal (44) und/oder relativ zu den Einlässen der Rohgasleitungen (120, 130, 140, 150) gleichzeitig sowohl mit dem Absaugkanal (44) als auch mit einem der Einlässe der Rohgasleitungen (120, 130, 140, 150) strömungsmäßig verbindbar ist.

3. Verteilersystem (110) nach Anspruch 2,
wobei der Verbindungskörper (112) mit dem darin ausgebildeten Kanal relativ zu dem Absaugkanal (44) und/oder den Einlässen der Rohgasleitungen (120, 130, 140, 150) linear verschiebbar ausgeführt ist; und/oder wobei die Wechslereinrichtung (111) eine dem Verbindungskörper (112) zugeordnete Führung (113) aufweist.

4. Verteilersystem (110) nach Anspruch 2,
wobei der Verbindungskörper (112) mit dem darin ausgebildeten Kanal relativ zu dem Absaugkanal (44) und/oder relativ zu den Einlässen der Rohgasleitungen (120, 130, 140, 150) verdrehbar ist.

5. Verteilersystem (110) nach Anspruch 2 oder 4,
wobei die Wechslereinrichtung (111) einen dem Verbindungskörper (112) zugeordneten Revolvermechanismus aufweist, über den der Verbindungskörper (112) relativ zu dem Absaugkanal (44) und/oder relativ zu den Einlässen der Rohgasleitungen (120, 130, 140, 150) verdrehbar ist.

6. Verteilersystem (110) nach einem der Ansprüche 1 bis 5,
wobei vorzugsweise jede Auslassöffnung (161, 162, 163, 164) des Anschlussbereichs (160) einen entsprechend zugeordneten Verschluss (165, 166, 167, 168) aufweist zum bedarfsweisen Verschließen der entsprechenden Auslassöffnung (161, 162, 163, 164), insbesondere dann, wenn die Auslassöffnung (161, 162, 163, 164) nicht mit dem Einlass der zugeordneten Rohgasleitung (120, 130, 140, 150) strömungsmäßig verbunden ist.

7. Verteilersystem (110) nach einem der Ansprüche 1 bis 6,
wobei der Einlass von vorzugsweise jeder Rohgasleitung (120, 130, 140, 150) axial im Hinblick auf eine der Rohgasleitung (120, 130, 140, 150) zugeordnete Auslassöffnung (161, 162, 163, 164) des Anschlussbereichs (160) ausgebildet ist; und/oder
wobei der Einlass von vorzugsweise jeder Rohgasleitung (120, 130, 140, 150) oberhalb der der Rohgasleitung (120, 130, 140, 150) zugeordneten Auslassöffnung (161, 162, 163, 164) angeordnet ist.

8. Verteilersystem (110) nach einem der Ansprüche 1 bis 7,
wobei vorzugsweise jeder Einlass der Rohgasleitungen (120, 130, 140, 150) einen entsprechend zugeordneten Verschluss (171, 172, 173, 174) aufweist zum bedarfsweisen Verschließen des entsprechenden Einlasses, insbesondere dann, wenn der Einlass nicht mit dem Absaugkanal (44) der Pulverbeschichtungskabine (43) strömungsmäßig verbunden ist.

9. Verteilersystem (110) nach einem der Ansprüche 1 bis 8,
wobei das Verteilersystem (110) ferner einen ersten Pulverabscheider (121) und mindestens einen weiteren, zweiten Pulverabscheider (131, 141, 151) aufweist, wobei ein Rohgas-Einlass (122) des ersten Pulverabscheiders (121) strömungsmäßig mit der ersten Rohgasleitung (120) und ein Rohgas-Einlass (132, 142, 152) des mindestens einen zweiten Pulverabscheiders (131) strömungsmäßig mit der mindestens einen zweiten Rohgasleitung (130, 140, 150) verbunden oder verbindbar ist.

10. Verteilersystem (110) nach Anspruch 9,
wobei dem ersten Pulverabscheider (121) ein Pulver-Rückführungssystem zugeordnet ist zum Rückführen von in dem ersten Pulverabscheider (121) abgetrennten Pulver; und/oder
wobei dem mindestens einen zweiten Pulverabscheider (131) ein Pulver-Rückführungssystem zugeordnet ist zum Rückführen von in dem mindestens einen zweiten Pulverabscheider (131) abgetrennten Pulver.

11. Verteilersystem (110) nach Anspruch 9 oder 10,
wobei jeder Pulverabscheider (121, 131) jeweils einen Reingas-Auslass aufweist, über den gereinigte Luft abführbar ist, wobei vorzugsweise jeder Reingas-Auslass der Pulverabscheider (121, 131) strömungsmäßig mit der Saugseite eines gemeinsamen Sauggebläses (170) verbunden oder verbindbar ist.

12. Verteilersystem (110) nach Anspruch 11,
wobei dem Sauggebläse (170) ein Nach-Filtersystem zum Feinreinigen des Reingases strömungsmäßig nachgeschaltet ist.

13. Verteilersystem (110) nach einem der Ansprüche 9 bis 12,
wobei vorzugsweise jeder Pulverabscheider (121, 131) und insbesondere jeder zweite Pulverabscheider (131) als Platten- oder Patronenfilter ausgeführt ist; oder
wobei mindestens ein Pulverabscheider (121) als Fliehkraftabscheider ausgeführt ist, und wobei dieser als Fliehkraftabscheider ausgebildete mindestens eine Pulverabscheider (121) stromabwärts mit einem Platten- bzw. Patronenfilter (56) strömungsmäßig verbunden ist, und wobei dem als Fliehkraftabscheider ausgeführten mindestens einen Pulverabscheider (121) ein Pulver-Rückführungssystem zugeordnet ist.

14. Pulverbeschichtungssystem mit einer Pulverbeschichtungskabine (43) und einem Verteilersystem (110) nach einem der Ansprüche 1 bis 13.

15. Pulverbeschichtungssystem nach Anspruch 14,
wobei der Absaugkanal (44) strömungsmäßig mit dem Innenraum der Pulverbeschichtungskabine (43) verbunden oder verbindbar ist zum Absaugen von Überschusspulver; und/oder
wobei das Verteilersystem (110) einen ersten Pulverabscheider (121) und mindestens einen weiteren, zweiten Pulverabscheider (131) aufweist, wobei ein Rohgas-Einlass (122) des ersten Pulverabscheiders (121) strömungsmäßig mit der ersten Rohgasleitung (120) und ein Rohgas-Einlass (132, 142, 152) des mindestens einen zweiten Pulverabscheiders (131) strömungsmäßig mit der mindestens einen zweiten Rohgasleitung (130, 140, 150) verbunden oder verbindbar ist, und wobei zumindest dem ersten Pulverabscheider (121) und vorzugsweise allen Pulverabscheidern (121, 131) ein Pulver-Rückführungssystem zugeordnet ist zum Rückführen von in dem Pulverabscheider (121) abgetrennten Pulver zu einer Pulversprühvorrichtung (40) oder der Pulverbeschichtungskabine (43).

## Claims

1. A distributor system (110) for an air/powder mixture suctioned from a powder coating booth (43), wherein the distributor system (110) comprises a switching device (111) fluidly connected or connectable to a suction channel (44) of the powder coating booth (43), said device being designed to alternatively connect the suction channel (44) fluidly to the inlet of a first raw gas line (120) or to the inlet of at least one further second raw gas line (130, 140, 150), wherein the first raw gas line (120) is associated with a first powder separator (121) and the at least one second raw gas line (130, 140, 150) is associated with at least one second powder separator (131),
**characterized in that**
a connecting region (160) fluidly connected or connectable to the suction channel (44) or formed in the suction channel (44) is provided in which a first outlet opening (161) and at least one further second outlet opening (162, 163, 164) is formed, wherein the switching device (111) is designed to alternatively fluidly connect the first outlet opening (161) of the connecting region (160) to the inlet of the first raw gas line (120) or the at least one second outlet opening (162, 163, 164) of the connecting region (160) to the inlet of the at least one second raw gas line (120, 130, 140, 150).

2. The distributor system (110) according to claim 1,
wherein the switching device (111) comprises a channel formed in a connecting body (112) which is simultaneously fluidly connectable to both the suction channel (44) as well as to one of the inlets of the raw gas lines (120, 130, 140, 150) by moving the connecting body (112) relative to the suction channel (44) and/or relative to the inlets of the raw gas lines (120, 130, 140, 150).

3. The distributor system (110) according to claim 2,
wherein the connecting body (112) with the channel formed therein is of linearly displaceable construction relative to the suction channel (44) and/or the inlets of the raw gas lines (120, 130, 140, 150); and/or
wherein the switching device (111) comprises a guide (113) allocated to the connecting body (112).

4. The distributor system (110) according to claim 2,
wherein the connecting body (112) with the channel formed therein is rotatable relative to the suction channel (44) and/or relative to the inlets of the raw gas lines (120, 130, 140, 150).

5. The distributor system (110) according to claim 2 or 4,
wherein the switching device (111) comprises a rotating mechanism allocated to the connecting body (112) via which the connecting body (112) can be rotated relative to the suction channel (44) and/or relative to the inlets of the raw gas lines (120, 130, 140, 150).

6. The distributor system (110) according to one of claims 1 to 5,
wherein preferably each outlet opening (161, 162, 163, 164) of the connecting region (160) exhibits a correspondingly allocated closure (165, 166, 167, 168) for closing the respective outlet opening (161, 162, 163, 164) as required, particularly when the outlet opening (161, 162, 163, 164) is not fluidly connected to the inlet of the associated raw gas line (120, 130, 140, 150).

7. The distributor system (110) according to one of claims 1 to 6,
wherein the inlet of preferably each raw gas line (120, 130, 140, 150) is formed axially with respect to an outlet opening (161, 162, 163, 164) of the connecting region (160) associated with the raw gas line; and/or wherein the inlet of preferably each raw gas line (120, 130, 140, 150) is arranged above the outlet opening (161, 162, 163, 164) associated with the raw gas line (120, 130, 140, 150).

8. The distributor system (110) according to one of claims 1 to 7,
wherein preferably each inlet of the raw gas lines (120, 130, 140, 150) exhibits a correspondingly allocated closure (171, 172, 173, 174) for closing the respective inlet as required, particularly when the inlet is not fluidly connected to the suction channel (44) of the powder coating booth (43).

9. The distributor system (110) according to one of claims 1 to 8,
wherein the distributor system (110) further comprises a first powder separator (121) and at least one further second powder separator (131, 141, 151), wherein one raw gas inlet (122) of the first powder separator (121) is fluidly connected or connectable to the first raw gas line (120) and one raw gas inlet (132, 142, 152) of the at least one second powder separator (131) is fluidly connected or connectable to the at least one second raw gas line (130, 140, 150).

10. The distributor system (110) according to claim 9,
wherein a powder recovery system is allocated to the first powder separator (121) for the return of powder separated in the first powder separator (121); and/or
wherein a powder recovery system is allocated to the at least one second powder separator (131) for the return of powder separated in the at least one second powder separator (131).

11. The distributor system (110) according to claim 9 or 10,
wherein each powder separator (121, 131) comprises a respective clean gas outlet via which the cleansed air can be discharged, wherein preferably each clean gas outlet of the powder separator (121, 131) is fluidly connected or connectable to the intake side of a common suction fan (170).

12. The distributor system (110) according to claim 11,
wherein the suction fan (170) is fluidly downstream of a post-filtration system for fine cleaning the clean gas.

13. The distributor system (110) according to one of claims 9 to 12,
wherein preferably each powder separator (121, 131) and in particular each second powder separator (131) is realized as a plate or cartridge filter; or
wherein at least one powder separator (121) is realized as a centrifugal separator, and wherein said at least one powder separator (121) realized as a centrifugal separator is fluidly connected downstream to a plate or cartridge filter (56), and wherein a powder recovery system is allocated to the at least one powder separator (121) realized as a centrifugal separator.

14. A powder coating system having a powder coating booth (43) and a distributor system (110) according to one of claims 1 to 13.

15. The powder coating system according to claim 14,
wherein the suction channel (44) is fluidly connected or connectable to the interior of the powder coating booth (43) for suctioning off excess powder; and/or
wherein the distributor system (110) comprises a first powder separator (121) and at least one further second powder separator (131), wherein one raw gas inlet (122) of the first powder separator (121) is fluidly connected or connectable to the first raw gas line (120) and one raw gas inlet (132, 142, 152) of the at least one second powder separator (131) is fluidly connected or connectable to the at least one second raw gas line (130, 140, 150), and wherein a powder recovery system is allocated to at least the first powder separator (121) and preferably to all of the powder separators (121, 131) for the return of powder separated in the powder separator (121) to a powder spraying device (40) or to the powder coating booth (43).

## Revendications

1. Système distributeur (110) pour un mélange air-poudre aspiré depuis une cabine de revêtement par pulvérisation de poudre (43), le système distributeur (110) comprenant un dispositif changeur (111) relié ou susceptible d'être relié en termes d'écoulement à un canal d'aspiration (44) de la cabine de revêtement par pulvérisation de poudre (43), dispositif qui est réalisé pour relier au choix le canal d'aspiration (44) en termes d'écoulement à l'entrée d'une première conduite à gaz brut (120) et à l'entrée d'au moins une autre, seconde conduite à gaz brut (130, 140, 150), la première conduite à gaz brut (120) étant associée à un premier séparateur de poudre (121) et ladite au moins une seconde conduite à gaz brut (130, 140, 150) étant associée à au moins un second séparateur de poudre (131),
**caractérisé en ce que**
il est prévu une zone de raccordement (160) reliée ou susceptible d'être reliée en termes d'écoulement au canal d'aspiration (44) ou bien réalisée dans le canal d'aspiration (44), zone dans laquelle sont ménagées une première ouverture de sortie (161) et au moins une autre, seconde ouverture de sortie (162, 163, 164), le dispositif changeur (111) étant réalisé pour relier en termes d'écoulement au choix la première ouverture de sortie (161) de la zone de raccordement (160) à l'entrée de la première conduite à gaz brut (120) ou ladite au moins une seconde ouverture de sortie (162, 163, 164) de la zone de raccordement (160) à l'entrée de ladite au moins une seconde conduite à gaz brut (120, 130, 140, 150).

2. Système distributeur (110) selon la revendication 1,
dans lequel le dispositif changeur (111) comprend un canal réalisé dans un corps de liaison (112), canal qui est susceptible d'être relié en termes d'écoulement simultanément aussi bien au canal d'aspiration (44) qu'à l'une des entrées des conduites à gaz brut (120, 130, 140, 150) par déplacement du corps de liaison (112) par rapport au canal d'aspiration (44) et/ou par rapport aux entrées des conduites à gaz brut (120, 130, 140, 150).

3. Système distributeur (110) selon la revendication 2,
dans lequel le corps de liaison (112) avec le canal réalisé dans celui-ci est réalisé de manière à pouvoir se déplacer linéairement par rapport au canal d'aspiration (44) et/ou par rapport aux entrées des conduites à gaz brut (120, 130, 140, 150) ; et/ou
le dispositif changeur (111) présente un guidage (113) associé au corps de liaison (112).

4. Système distributeur (110) selon la revendication 2,
dans lequel le corps de liaison (112) avec le canal réalisé dans celui-ci est mobile en rotation par rapport au canal d'aspiration (44) et/ou par rapport aux entrées des conduites à gaz brut (120, 130, 140, 150).

5. Système distributeur (110) selon la revendication 2 ou 4,
dans lequel le dispositif changeur (111) comprend un mécanisme à barillet associé au corps de liaison (112), par lequel le corps de liaison (112) est mobile en rotation par rapport au canal d'aspiration (44) et/ou par rapport aux entrées des conduites à gaz brut (120, 130, 140, 150).

6. Système distributeur (110) selon l'une des revendications 1 à 5,
dans lequel de préférence chaque ouverture de sortie (161, 162, 163, 164) de la zone de raccordement (160) présente un obturateur (165, 166, 167, 168) associé en correspondance pour fermer en fonction des besoins l'ouverture de sortie correspondante (161, 162, 163, 164), en particulier lorsque l'ouverture de sortie (161, 162, 163, 164) n'est pas reliée en termes d'écoulement à l'entrée de la conduite à gaz brut (120, 130, 140, 150).

7. Système distributeur (110) selon l'une des revendications 1 à 6,
dans lequel l'entrée de préférence de chaque conduite à gaz brut (120, 130, 140, 150) est réalisée axialement à l'égard d'une ouverture de sortie (161, 162, 163, 164) de la zone de raccordement (160), associée à la conduite à gaz brut (120, 130, 140, 150) ; et/ou
l'entrée de préférence de chaque conduite à gaz brut (120, 130, 140, 150) est disposée au-dessus de l'ouverture de sortie (161, 162, 163, 164) associée à la conduite à gaz brut (120, 130, 140, 150).

8. Système distributeur (110) selon l'une des revendications 1 à 7,
dans lequel de préférence chaque entrée des conduites à gaz brut (120, 130, 140, 150) présente un obturateur (171, 172, 173, 174) associé en correspondance pour fermer en fonction des besoins l'entrée correspondante, en particulier lorsque l'entrée n'est pas reliée en termes d'écoulement au canal d'aspiration (44) de la cabine de revêtement par pulvérisation de poudre (43).

9. Système distributeur (110) selon l'une des revendications 1 à 8,
dans lequel le système distributeur (110) comprend en outre un premier séparateur de poudre (121) et au moins un autre, second séparateur de poudre (131, 141, 151), l'entrée de gaz brut (122) du premier séparateur de poudre (121) étant reliée ou susceptible d'être reliée en termes d'écoulement à la première conduite à gaz brut (120), et une entrée de gaz brut (132, 142, 152) dudit au moins un second séparateur de poudre (131) étant reliée ou susceptible d'être reliée en termes d'écoulement à ladite au moins une seconde conduite à gaz brut (130, 140, 150).

10. Système distributeur (110) selon la revendication 9,
dans lequel un système de retour de poudre est associé au premier séparateur de poudre (121) pour faire retourner la poudre séparée dans le premier séparateur de poudre (121) ; et/ou
un système de retour de poudre est associé audit au moins un second séparateur de poudre (131) pour faire retourner la poudre séparée dans ledit au moins un second séparateur de poudre (131).

11. Système distributeur (110) selon la revendication 9 ou 10,
dans lequel chaque séparateur de poudre (121, 131) présente une sortie respective de gaz pur permettant d'évacuer de l'air purifié, et de préférence chaque sortie de gaz pur des séparateurs de poudre (121, 131) est reliée ou susceptible d'être reliée en termes d'écoulement au côté aspiration d'une soufflante d'aspiration commune (170).

12. Système distributeur (110) selon la revendication 11,
dans lequel un système de post-filtrage pour la purification fine du gaz pur est agencé en termes d'écoulement en aval de la soufflante d'aspiration (170).

13. Système distributeur (110) selon l'une des revendications 9 à 12,
dans lequel de préférence chaque séparateur de poudre (121, 131) et en particulier un séparateur de poudre (131) sur deux est réalisé sous forme de filtre à plaque ou à cartouche ; ou
au moins un séparateur de poudre (121) est réalisé sous forme de séparateur centrifuge et ledit au moins un séparateur de poudre (121) réalisé sous forme de séparateur centrifuge est relié en aval en termes d'écoulement à un filtre à plaque ou à cartouche (56), et un système de retour de poudre est associé audit au moins un séparateur de poudre (121) réalisé sous forme de séparateur centrifuge.

14. Système de revêtement par pulvérisation de poudre comportant une cabine de revêtement par pulvérisation de poudre (43) et un système distributeur (110) selon l'une des revendications 1 à 13.

15. Système de revêtement par pulvérisation de poudre selon la revendication 14,
dans lequel
le canal d'aspiration (44) est relié ou susceptible d'être relié en termes d'écoulement au volume intérieur de la cabine de revêtement par pulvérisation de poudre (43) pour aspirer de la poudre excédentaire ; et/ou le système distributeur (110) comprend un premier séparateur de poudre (121) et au moins un autre, second séparateur de poudre (131), une entrée de gaz brut (122) du premier séparateur de poudre (121) étant reliée ou susceptible d'être reliée en termes d'écoulement à la première conduite à gaz brut (120) et une entrée de gaz brut (132, 142, 152) dudit au moins un second séparateur de poudre (131) est reliée ou susceptible d'être reliée en termes d'écoulement à ladite au moins une seconde conduite à gaz brut (130, 140, 150), et un système de retour de poudre est associé au moins au premier séparateur de poudre (121) et de préférence à tous les séparateurs de poudre (121, 131) pour faire retourner de la poudre séparée dans le séparateur de poudre (121) jusqu'à un dispositif de pulvérisation de poudre (40) ou jusqu'à la cabine de revêtement par pulvérisation de poudre (43).
